# EUROPÄISCHE PATENTSCHRIFT

(11) **EP 2 265 455 B1**
(45) Veröffentlichungstag und Bekanntmachung des Hinweises auf die Patenterteilung: **20.07.2011**
(21) Anmeldenummer: 08873756.4
(22) Anmeldetag: 05.12.2008
(51) Int. Cl.: B60K 6/48, B60W 20/00, B60W 50/04, F02D 41/30, B60W 30/18, B60W 10/06, B60W 10/08

(54) **VERFAHREN UND VORRICHTUNG ZUR BESTIMMUNG VON LERNWERTEN FÜR DIE STEUERUNG EINER BRENNKRAFTMASCHINE**
METHOD AND DEVICE FOR DETERMINING LEARNED VALUES FOR CONTROLLING AN INTERNAL COMBUSTION ENGINE
PROCÉDÉ ET DISPOSITIF DE DÉTERMINATION DE VALEURS D'APPRENTISSAGE POUR LA COMMANDE D'UN MOTEUR À COMBUSTION INTERNE

(30) Priorität: 01.04.2008 DE 102008000911
(43) Veröffentlichungstag der Anmeldung: 29.12.2010
(73) Patentinhaber: Robert Bosch GmbH, 70442 Stuttgart (DE)
(72) Erfinder: BECKER, Oliver, 69198 Schriessheim (DE); WEISSER, Christoph, 70839 Gerlingen (DE)
(86) Internationale Anmeldenummer: PCT/EP2008/066906
(87) Internationale Veröffentlichungsnummer: WO 2009/121435

(56) Entgegenhaltungen:
- WO-A-2006/101253
- DE-A1- 4 312 587
- DE-A1- 10 305 523
- DE-A1-102006 021 301
- DE-B3-102006 027 405
- US-A1- 2002 079 149

## Beschreibung

### Stand der Technik

Die Erfindung geht aus von einer Vorrichtung und einem Verfahren gemäß der unabhängigen Ansprüche.

Aus dem Stand der Technik sind Verfahren und Vorrichtungen zur Steuerung einer Brennkraftmaschine bekannt, bei denen eine erste Antriebseinheit, die als Brennkraftmaschine ausgebildet ist und eine zweite Antriebseinheit ein Fahrzeug antreiben. Solche Fahrzeuge werden üblicher Weise als Hybridfahrzeuge bezeichnet.

Um die heutigen Emissionsgrenzwerte nicht zu überschreiten, werden hohe Anforderungen an die Mengengenauigkeit des Einspritzsystems der Brennkraftmaschine über die gesamte Fahrzeuglebensdauer gestellt. Bedingt durch Exemplarstreuungen von Injektoren, Düsenverschleiß und Düsenverkorkung sind diese Ziele nicht ohne komplexe Kompensationsstrategien zu erreichen.

Hierzu ist es erforderlich, dass in bestimmten Betriebszuständen, wie beispielsweise dem Schubbetrieb, Lernwerte ermittelt werden, die dann zur Korrektur verschiedener Sollgrößen verwendet werden. Eine solche Korrektur wird beispielsweise als Nullmengenkalibrierung bezeichnet. Mit dieser Nullmengenkalibrierung wird die korrekte Menge der Voreinspritzung über die Lebensdauer des Fahrzeugs sichergestellt. Diese Nullmengenkalibrierung ermittelt eine Mindestansteuerdauer der Injektoren, bei der eine vorher definierte motorische Umsetzung der eingespritzten Kraftstoffmenge stattfindet. Diese wird durch das Überschreiten einer definierten Drehzahlschwelle im Schubbetrieb detektiert. Eine solche Vorgehensweise ist bekannt, vgl. DE 10 2006 027 405, DE 10 2006 021 301.

Problematisch hierbei ist es, dass bei der Ermittlung der Lernwerte üblicher Weise die Brennkraftmaschine sich in dem so genannten Schubbetrieb befinden muss. Neben dem Schubbetrieb müssen in der Regel noch weitere Randbedingungen vorliegen, um die Lernwerte erfolgreich ermitteln zu können. Zu diesen weiteren Randbedingungen gehören insbesondere ein betriebswarmer Motor, ein beschränkter Drehzahlbereich mit begrenzter Drehzahldynamik und ein eingeschwungener Raildruck.

Aufgrund dieser Problematik ist ein Einlernen der Lernwerte erst nach einer längeren Fahrstrecke, beispielsweise von 3000 km garantiert. Erst nach dieser Fahrstrecke wird daher die korrekte Voreinspritzmenge zugemessen.

### Offenbarung der Erfindung

### Vorteile der Erfindung

Die erfindungsgemäße Vorgehensweise mit den Merkmalen der unabhängigen Ansprüche hat dem gegenüber den Vorteil, dass die Lernwerte sehr schnell nach einer kurzen Fahrstrecke ermittelt werden können. Dies wiederum hat zur Folge, dass eine präzise Kraftstoffzumessung möglich ist.

Die erfindungsgemäße Vorgehensweise ist dabei nicht auf die Ermittlung der Lernwerte bei der Nullmengenkalibrierung beschränkt. Die Vorgehensweise kann bei allen Verfahren eingesetzt werden, bei denen im Schubbetrieb Lernwerte, insbesondere Korrekturwerte und/oder Adaptionswerte ermittelt werden.

Beispielsweise kann die Vorgehensweise auch zur Ermittlung der Lernwerte einer Geberradadaption eingesetzt werden. Aufgrund von Toleranzen bei der Fertigung des Segmentrades kann nun der Fall eintreten, dass die Zähne nicht in gleichen Abständen auftreten. Zur Kompensierung dieser Toleranzen ist vorgesehen, dass die Abweichungen, die auf Toleranzen des Geberrads beruhen, gemessen und bei der anschließenden Steuerung berücksichtigt werden.

### Zeichnung

Ausführungsbeispiele der Erfindung sind in den Zeichnungen dargestellt und in der nachfolgenden Beschreibung näher erläutert. Es zeigen:
- Figur 1: die wesentlichen Elemente eines Hybridfahrzeugs und
- Figur 2: ein Flussdiagramm zur Beschreibung der erfindungsgemäßen Vorgehensweise.

### Beschreibung der Ausführungsbeispiele

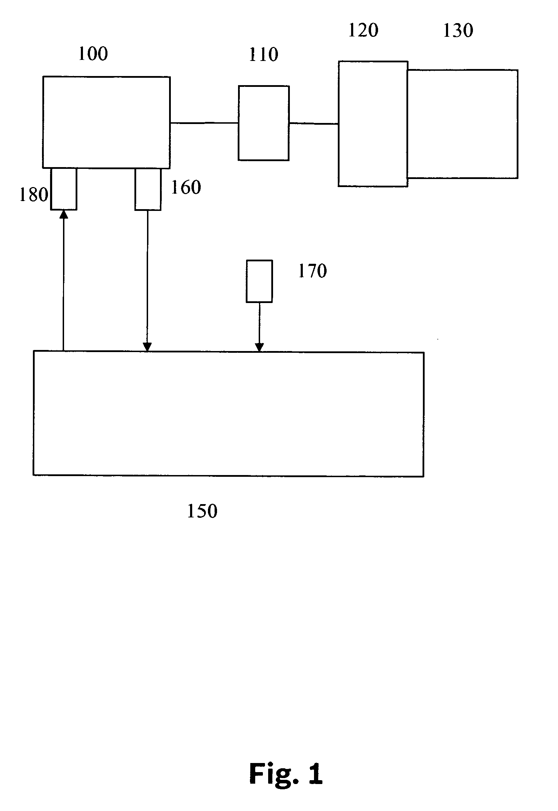

In Figur 1 sind die wesentlichen Elemente einer Ausführungsform eines Hybridfahrzeugs dargestellt. Mit 100 ist eine Brennkraftmaschine bezeichnet, die über eine Kupplung 110 mit einer zweiten Antriebseinheit 120 in Verbindung steht. Die zweite Antriebseinheit 120 ist mit einem Getriebe 130 verbunden. Des weiteren ist eine Steuereinheit 150 vorgesehen. Die Steuereinheit 150 verarbeitet Signale von Sensoren 160 verarbeitet, die an der Brennkraftmaschine angeordnet sind, von Sensoren 170, die den Betriebszustand des Fahrzeugs oder Umgebungsbedingungen erfassen. Des weiteren sind Steller 180 vorgesehen, mit denen verschiedene Größen der Brennkraftmaschine beeinflusst werden können. So ist beispielsweise ein Steller vorgesehen, mit dem der Zeitpunkt und/oder die eingespritzte Kraftstoffmenge beeinflussbar ist. Des weiteren können Steller vorgesehen sein, die die der Brennkraftmaschine zugeführte Luftmenge beeinflussen.

Üblicher Weise sind bei einem Hybridfahrzeug unterschiedliche Fahrzustände vorgesehen. Läuft die Brennkraftmaschine und verbindet die Kupplung 110 die Brennkraftmaschine mit der zweiten Antriebseinheit, bzw. mit dem Getriebe 130, so treibt die Brennkraftmaschine das Getriebe und damit das gesamte Fahrzeug an. In diesem Fall ist üblicher Weise die zweite Antriebseinheit nicht in Betrieb. Durch Öffnen der Kupplung 110 wird die Brennkraftmaschine von dem Getriebe getrennt. In diesem Fall ist ein Antrieb des Getriebes und damit des Fahrzeugs über die zweite Antriebseinheit möglich. In diesem Fall wird das Fahrzeug durch die zweite Antriebseinheit angetrieben. Diese zweite Antriebseinheit ist vorzugsweise als Elektromotor ausgebildet.

Wird das Fahrzeug nun gebremst, so wird die Kupplung 110 geöffnet, und das Getriebe treibt die zweite Antriebseinheit 120 an und der Elektromotor wird als Generator betrieben. Dies hat zur Folge, dass der Generator Energie in die Energiequelle zurückspeißt.

Üblicher Weise ist vorgesehen, dass beim Antrieb des Fahrzeugs mit der zweiten Antriebseinheit 120 die Kupplung 110 geöffnet ist und die Brennkraftmaschine stillsteht.

Erfindungsgemäß ist nun vorgesehen, dass in Betriebszuständen, in denen Lernwerte zu ermitteln sind, die Kupplung 110 geschlossen ist, so lange die zweite Antriebseinheit das Fahrzeug antreibt. Dies bedeutet, dass in den bestimmten Betriebszuständen, in denen die Lernwerte ermittelt werden, die zweite Antriebseinheit die Brennkraftmaschine mitschleppt. Dies bedeutet, dass die Brennkraftmaschine 100 in einem Betriebszustand betrieben wird, der dem üblichen Schubbetrieb entspricht.

Bei der in Figur 1 dargestellten Ausgestaltung handelt es sich um eine spezielle Ausführungsform eines Hybridfahrzeugs. Die erfindungsgemäße Vorgehensweise ist nicht auf diese Ausführungsform beschränkt. Sie kann bei allen Hybridsystemen eingesetzt werden, bei denen die Brennkraftmaschine ohne Einspritzung beim Betrieb mit Elektroantrieb mitgeschleppt wird.

Erfindungsgemäß ist vorgesehen, dass die Brennkraftmaschine mittels der zweiten Antriebseinheit in einen künstlichen Schubbetrieb versetzt wird. In diesem künstlichen Schubbetrieb werden dann die Lernwerte ermittelt. Während dieses künstlichen Schubbetriebs wird das Fahrzeug lediglich durch die zweite Antriebseinheit angetrieben. Die Brennkraftmaschine liefert keinerlei Beitrag zum Antrieb des Fahrzeug. Die Brennkraftmaschine wird in diesem Betriebszustand durch die zweite Antriebseinheit mitgeschleppt.

Dies bedeutet, dass in Betriebszuständen, bei denen der Elektroantrieb den Vortrieb des Fahrzeugs gewährleistet, die Brennkraftmaschine nicht abgekoppelt wird sondern angekoppelt bleibt und von der Elektromaschine angetrieben wird. Aus Sicht des Verbrennungsmotors befindet sich das Fahrzeug damit im Schub, d. h. in diesem Fahrzustand können die Lernwerte ermittelt werden.

Vorteilhaft hierbei ist es, dass mit dieser Vorgehensweise die Lernhäufigkeit drastisch erhöht wird und damit das Einlernen der Lernwerte deutlich beschleunigt wird. Es ist nun kein reiner Schubbetrieb mehr notwendig, da die Lernwerte auch in Schwachlastpunkten gelernt werden können. Solche Schwachlastpunkte treten insbesondere bei kurzzeitigen Konstantfahrten in der Stadt und/oder bei Fahrten auf der Landstraße bei leichtem Gefälle auf.

Die oben genannte Vorgehensweise wird vorzugsweise dann durchgeführt, wenn ein zügiges Einlernen der Lernwerte benötigt wird. Dies ist insbesondere bei Neufahrzeugen der Fall oder nach einem Injektortausch in der Werkstatt. Insbesondere ist diese Vorgehensweise vorteilhaft, bei Fahrzeuganwendungen, bei denen nur sehr selten ein Schubbetrieb auftritt. Dies sind insbesondere Automatikfahrzeuge sowie bei Fahrern, die regelmäßig kurz nach Schubübergang auskuppeln.

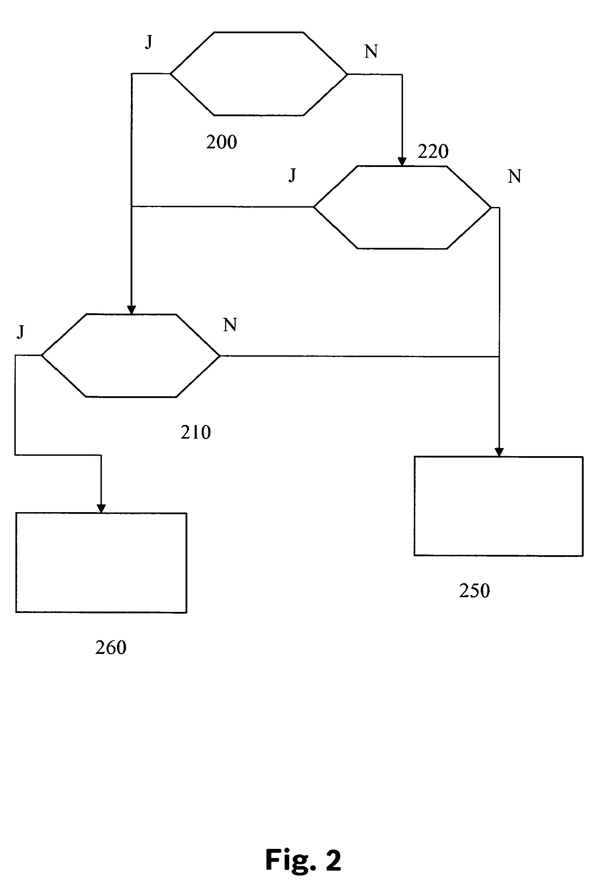

In Figur 2 ist die erfindungsgemäße Vorgehensweise beispielhaft anhand eines Flussdiagramms dargestellt. Eine erste Abfrage 200 überprüft, ob eine Neumontage von Bauelementen erfolgt ist. Dies ist insbesondere nach einem Werkstattaufenthalt oder nach Auslieferung des Fahrzeugs der Fall. Ist dies der Fall, so folgt die Abfrage 210.

Wird in Schritt 200 keine Neumontage erkannt, so überprüft die Abfrage 220, ob seit dem letzten Ermitteln der Lernwerte ein bestimmte Zeitspanne verstrichen ist oder ob seit dem letzten Ermitteln der Lernwerte eine bestimmte Fahrleistung von dem Fahrzeug erbracht wurde. Ist dies der Fall, so folgt die Abfrage 210. Die Abfrage 220 gewährleistet, dass die Lernwerte in einem bestimmten Abstand ermittelt werden. Insbesondere werden die Lernwerte in einem festen Abstand ermittelt. So wird als Abstand der zeitliche Abstand verwendet oder es wird überprüft, ob das Fahrzeug eine bestimmte Anzahl von Fahrstrecken zurückgelegt hat.

Erkennt die Abfrage 220, dass dieser Abstand noch nicht erreicht wird, so erfolgt in Schritt 250 der Normalbetrieb.

Die Abfrage 210 überprüft, ob ein Fahrzustand vorliegt, in dem der künstliche Schubbetrieb eingeleitet werden kann. Ist dies nicht der Fall, so wird das Fahrzeug im Schritt 250 im Normalbetrieb betrieben. Ist dies der Fall, so wird in Schritt 260 der künstliche Schubbetrieb eingeleitet und die Lernwerte ermittelt.

Die dargestellte Ausführungsform ist nur beispielhaft. So kann auch vorgesehen sein, dass der Elektromotor die Brennkraftmaschine immer mitschleppt. In diesem Fall wird lediglich überprüft, ob ein solcher Fahrzustand vorliegt. Ist dies der Fall, so werden die Lernwerte ermittelt.

## Patentansprüche

1. Verfahren zum Ermitteln von Lernwerten für die Steuerung einer Brennkraftmaschine (100), wobei die Brennkraftmaschine und eine zweite Antriebseinheit (120) ein Fahrzeug antreiben, **dadurch gekennzeichnet, dass** in einem bestimmten Betriebszustand die zweite Antriebseinheit (120) die Brennkraftmaschine (100) schleppt und dass in dem bestimmten Betriebszustand während des Mitschleppens Lernwerte ermittelt werden.

2. Verfahren nach Anspruch 1, **dadurch gekennzeichnet, dass** es sich bei der zweiten Antriebseinheit (120) um wenigstens einen Elektromotor handelt.

3. Verfahren nach Anspruch 1, **dadurch gekennzeichnet, dass** in den bestimmten Betriebszuständen die Brennkraftmaschine (100) keinen Beitrag zum Antrieb des Fahrzeugs leistet.

4. Verfahren nach Anspruch 1, **dadurch gekennzeichnet, dass** als Lernwert eine Mindestansteuerdauer ermittelt wird.

5. Verfahren nach Anspruch 1, **dadurch gekennzeichnet, dass** die Lernwerte in festen Abständen ermittelt werden.

6. Verfahren nach Anspruch 1, **dadurch gekennzeichnet, dass** die Lernwerte nach einem Werkstattaufenthalt ermittelt werden.

7. Vorrichtung zum Ermitteln von Lernwerten für die Steuerung einer Brennkraftmaschine, wobei die Brennkraftmaschine (100) und eine zweite Antriebseinheit (120) Fahrzeug antreiben, **dadurch gekennzeichnet, dass** Mittel vorgesehen sind, die bewirken, dass in einem bestimmten Betriebszustand die zweite Antriebseinheit (120) die Brennkraftmaschine (100) schleppt, und die in dem bestimmten Betriebszustand während des Mitschleppens Lernwerte ermitteln.

## Claims

1. Method for determining learned values for controlling an internal combustion engine (100), wherein the internal combustion engine and a second drive unit (120) drive a vehicle, **characterized in that** in a certain operating state the second drive unit (120) entrains the internal combustion engine (100), and **in that** in the certain operating state learned values are determined during the entraining process.

2. Method according to Claim 1, **characterized in that** the second drive unit (120) is at least one electric motor.

3. Method according to Claim 1, **characterized in that** in the certain operating states the internal combustion engine (100) does not make any contribution to driving the vehicle.

4. Method according to Claim 1, **characterized in that** a minimum actuation period is determined as the learned value.

5. Method according to Claim 1, **characterized in that** the learned values are determined at fixed intervals.

6. Method according to Claim 1, **characterized in that** the learned values are determined after a visit to a workshop.

7. Device for determining learned values for controlling an internal combustion engine, wherein the internal combustion engine (100) and a second drive unit (120) drive a vehicle, **characterized in that** means are provided which cause the second drive unit (120) to entrain the internal combustion engine (100) in a certain operating state and which determine learned values during the entraining process in the certain operating state.

## Revendications

1. Procédé pour déterminer des valeurs d'apprentissage pour la commande d'un moteur à combustion interne (100), dans lequel le moteur à combustion interne et une deuxième unité d'entraînement (120) entraînent un véhicule, **caractérisé en ce que** dans un état de fonctionnement déterminé, la deuxième unité d'entraînement (120) entraîne le moteur à combustion interne (100) et **en ce que** dans l'état de fonctionnement déterminé pendant l'entraînement, des valeurs d'apprentissage sont déterminées.

2. Procédé selon la revendication 1, **caractérisé en ce que** la deuxième unité d'entraînement (120) est au moins un moteur électrique.

3. Procédé selon la revendication 1, **caractérisé en ce que** dans les états de fonctionnement déterminés, le moteur à combustion interne (100) ne fournit aucune contribution à l'entraînement du véhicule.

4. Procédé selon la revendication 1, **caractérisé en ce que** l'on détermine comme valeur d'apprentissage une durée de commande minimale.

5. Procédé selon la revendication 1, **caractérisé en ce que** les valeurs d'apprentissage sont déterminées à intervalles fixes.

6. Procédé selon la revendication 1, **caractérisé en ce que** les valeurs d'apprentissage sont déterminées après un passage en atelier.

7. Dispositif pour déterminer des valeurs d'apprentissage pour la commande d'un moteur à combustion interne, dans lequel le moteur à combustion interne (100) et une deuxième unité d'entraînement (120) entraînent un véhicule, **caractérisé en ce que** des moyens sont prévus, lesquels font en sorte que dans un état de fonctionnement déterminé, la deuxième unité d'entraînement (120) entraîne le moteur à combustion interne (100), et déterminent des valeurs d'apprentissage, dans l'état de fonctionnement déterminé pendant l'entraînement.
